# EUROPÄISCHE PATENTSCHRIFT

(11) **EP 3 446 905 B1**
(45) Veröffentlichungstag und Bekanntmachung des Hinweises auf die Patenterteilung: **14.07.2021**
(21) Anmeldenummer: 18189621.8
(22) Anmeldetag: 17.08.2018
(51) Int. Cl.: B60J 7/16, B60P 3/34

(54) **AUFSTELLBARES FAHRZEUGDACH**
ERECTABLE VEHICLE ROOF
TOIT DE VÉHICULE POUVANT ÊTRE RELEVÉ

(30) Priorität: 23.08.2017 DE 102017119302
(43) Veröffentlichungstag der Anmeldung: 27.02.2019
(73) Patentinhaber: REIMO Reisemobil-Center GmbH, 63329 Egelsbach (DE)
(72) Erfinder: Hoffmann, Ralf, 64293 Darmstadt (DE)
(74) Vertreter: Habermann Intellectual Property Partnerschaft von Patentanwälten mbB

(56) Entgegenhaltungen:
- DE-A1- 2 840 487
- DE-A1-102005 025 783
- DE-U- 7 322 628
- GB-A- 2 494 750
- US-A- 3 619 001
- US-A- 5 078 441

## Beschreibung

Die Erfindung betrifft eine Aufstelleinrichtung mit einer Hubeinrichtung für ein aufstellbares Fahrzeugdach mit einem verlagerbaren Dachelement, wobei das Dachelement an einem eine Dachöffnung eines Fahrzeugs umgebenden Rahmen verlagerbar gelagert werden kann, so dass das Dachelement in einer Schließposition die Dachöffnung bedeckt und in einer Öffnungsposition mindestens bereichsweise von der Dachöffnung beabstandet ist, wobei die Hubeinrichtung eine Hubscherengelenkmechanik mit zwei jeweils beabstandet von den jeweiligen Enden gelenkig miteinander verbundenen Tragarmen aufweist, und wobei eine Gasdruckfeder beabstandet von der Hubeinrichtung so zwischen dem Rahmen und dem Dachelement angeordnet ist, dass ein erstes Ende der Gasdruckfeder schwenkbar an dem Rahmen und ein entgegengesetztes zweites Ende der Gasdruckfeder schwenkbar an dem Dachelement angelenkt ist.

Ein mit einer derartigen Hubeinrichtung aufstellbares Fahrzeugdach kann beispielsweise bei Wohnmobilen zu verschiedenen Zwecken verwendet werden. Mit einem aufgestellten Fahrzeugdach kann bei Standzeiten des Wohnmobils die Kopffreiheit vergrößert und der Aufenthalt in dem Wohnmobil angenehmer gestaltet werden. Es sind weiterhin zahlreiche Wohnmobile bekannt, bei denen unterhalb des Fahrzeugdachs eine Schlaf- oder Liegefläche angeordnet ist. Es ist ebenfalls möglich, mit einer Hubeinrichtung den Stauraum eines Fahrzeuganhängers oder eines Nutzfahrzeugs zu vergrößern. Dabei kann ein mit der Hubeinrichtung aufstellbares Dachelement zwischen einer geschlossenen Stellung und einer geöffneten Stellung entweder parallel verlagert oder aber verschwenkt werden. Regelmäßig werden dabei zwei Hubeinrichtungen verwendet, die längs zweier gegenüberliegenden Seitenkanten zwischen dem aufstellbaren Dachelement und einem Fahrzeug, bzw. einem eine Dachöffnung umgebenden Rahmen angeordnet sind. Die beiden Hubeinrichtungen bilden dabei auch eine Führung für das Dachelement während einer Öffnungs- oder Schließbewegung.

Ein derartiges aufstellbares Dachelement kann auch bei nicht selbst angetriebenen Wohnwagen, bei Frachtfahrzeugen oder Lastanhängern oder aber bei ebenfalls als Fahrzeuge bezeichneten Booten und Schiffen verwendet werden, um im Bedarfsfall einen durch das ausgestellte Dachelement vergrößerten Freiraum zur Verfügung zu stellen.

Es sind verschiedene Hubscherengelenkmechaniken aus der Praxis bekannt, mit denen eine geeignete Verlagerung des Dachelements bewirkt werden kann. Dabei können sowohl eine gleichmäßige und parallele Verlagerung des Dachelements von dem Fahrzeug weg, ein Verkippen des Dachelements längs einer an dem Fahrzeug festgelegten Seitenkante sowie eine kombinierte Translations- und Verkippbewegung des Dachelements erreicht werden. Die Hubeinrichtung bildet üblicherweise eine Zwangsführung für das Dachelement, sodass keine weiteren Führungselemente für eine Verlagerung des Dachelements benötigt werden.

Eine konstruktiv einfache Hubscherengelenkmechanik weist zwei Tragarme auf, die beabstandet von den jeweiligen Enden gelenkig miteinander verbunden sind, und die jeweils an einem ersten Schwenkende schwenkbar an einem ersten Beschlagselement gelagert sind und an einem dem ersten Schwenkende gegenüberliegenden zweiten Stellende schwenkbar und linear verlagerbar an einem zweiten Beschlagselement gelagert sind. Das erste Beschlagselement des ersten Tragarms kann an dem Fahrzeug und das zweite Beschlagselement kann an dem Dachelement festgelegt werden, und das erste Beschlagselement des zweiten Tragarms kann an dem Dachelement und das zweite Beschlagselement an dem Fahrzeug festgelegt werden, sodass bei einer Öffnungsbewegung jeder Tragarm an dem Schwenkende verschwenkt und an dem Stellende sowohl verschwenkt als auch längs des zugeordneten Beschlagselements linear verlagert wird und dadurch das Dachelement von dem Fahrzeug weg verlagert wird.

Wenn die beiden Tragarme gleichlang sind und mittig miteinander gelenkig verbunden sind wird durch eine Öffnungsbewegung dieser Hubscherengelenkmechanik eine parallele Verlagerung des Dachelements von dem Fahrzeug bewirkt, sodass ein zunächst dicht an einem eine Dachöffnung umgebenden Rahmen anliegender umlaufender Rand des Dachelements gleichmäßig an allen Seiten gleichweit von dem Rahmen der Dachöffnung weg verlagert wird.

Es ist ebenfalls möglich, dass die beiden Tragarme der Hubscherengelenkmechanik nicht mittig, sondern jeweils in einem Abstand von der jeweiligen Mitte in Richtung der Schwenkenden gelenkig miteinander verbunden sind, sodass bei einer Öffnungsbewegung die jeweiligen Stellenden sich weiter öffnen als die jeweiligen Schwenkenden, bzw. der Abstand der Stellenden größer als der Abstand der Schwenkenden ist, sodass zusätzlich zu einer parallelen Verlagerung des Dachelements weg von dem Fahrzeug bzw. dem Rahmen eine Verkippung des Dachelements erfolgt und ein Bereich des Dachelements in der Nähe des Schwenkendes näher an dem Fahrzeug, bzw. dem Rahmen verbleibt, während ein Bereich des Dachelements in der Nähe des Stellendes weiter weg von dem Fahrzeug, bzw. dem Rahmen verlagert wird.

Aus der Praxis sind auch Hubscherengelenkmechaniken bekannt, bei denen ein Tragarm über einen Gelenkhebel mit dem zugeordneten Beschlagselement verbunden ist. Eine derartige Kniegelenkanordnung kann vorteilhaft bei Aufstelldächern von Wohnmobilen eingesetzt werden.

In allen beschriebenen Fällen liegen die beiden Tragarme in einer geschlossenen Position der Hubeinrichtung annähernd parallel zueinander und eng aneinander an. Wenn die Hubeinrichtung zwischen einem Rahmen und einem in einer geschlossenen Position daran anliegenden Dachelement angeordnet ist, liegen die beiden Tragarme in der geschlossenen Position entlang des Rahmens und des daran anliegenden Randes des Dachelements.

Um eine üblicherweise manuell bewirkte Öffnungsbewegung einer Aufstelleinrichtung für ein Fahrzeugdach zu unterstützen ist es ebenfalls bekannt, beispielsweise eine Gasdruckfeder beabstandet von einer Hubscherengelenkmechanik so zwischen dem Rahmen und dem Dachelement anzuordnen, dass ein erstes Ende der Gasdruckfeder schwenkbar an dem Rahmen und ein entgegengesetztes zweites Ende der Gasdruckfeder schwenkbar an dem Dachelement angelenkt ist. Eine derartige Aufstelleinrichtung ist beispielsweise in GB 2494750 A beschrieben. In einer geschlossenen Position liegt die Gasdruckfeder ebenfalls annähernd parallel zu dem Rahmen, bzw. zu dem Rand des Dachelements. In dieser Position bzw. Ausrichtung kann die Gasdruckfeder eine quer dazu gerichtete Öffnungsbewegung des Dachelements nicht unterstützen. Mit zunehmendem Abstand des Dachelements von dem Rahmen verschwenkt die Gasdruckfeder in eine zunehmend von dem Rahmen weg gerichtete Stellung, sodass eine Federkraft der Gasdruckfeder das Dachelement von dem Rahmen wegdrücken kann. Mit zunehmendem Öffnungsweg des Dachelements bewirkt die ständig weiter verschwenkte Gasdruckfeder eine zunehmende Unterstützung der nachfolgenden Öffnungsbewegung.

Bei einer Öffnungsbewegung muss jedoch zunächst das Dachelement mit einem erheblichen Kraftaufwand etwas von dem Rahmen beabstandet werden, bevor die unterstützende Wirkung der Gasdruckfeder spürbar wird und eine weitere Öffnungsbewegung zunehmend unterstützt. Der zu Beginn einer Öffnungsbewegung erforderliche Kraftaufwand wird jedoch als lästig und unangenehm empfunden.

Aus der Praxis sind hydraulisch, pneumatisch oder elektromotorisch betätigte Stellantriebe bekannt, mit denen ein Dachelement von dem Rahmen weg verlagert werden kann. Die Verlagerung des Dachelements kann mit solchen Stellantrieben ohne eine manuelle Unterstützung oder Betätigung durchgeführt werden. Derartige Stellantriebe sind jedoch kostenaufwändig und benötigen eine gesonderte Energieversorgung, die gegebenenfalls in dem Fahrzeug oder durch das Fahrzeug zur Verfügung gestellt werden muss.

Beispielsweise aus US 5 078 441 A, aus US 3 619 001 A oder aus DE 28 40 487 A1 ist eine Hubeinrichtung mit einer Hubscherengelenkmechanik bekannt, bei der eine Schraubenfeder an dem betreffenden Beschlagselement so angeordnet ist, dass bei einer Öffnungsbewegung des Dachelements eine lineare Verlagerung des Stellendes eines auch verschwenkbar gelagerten Tragarms der Hubscherengelenkmechanik durch die von der vorgespannten Schraubenfeder aufgebrachte Federkraft unterstützt wird. Die Schraubenfeder unterstützt dadurch insbesondere den Beginn einer Öffnungsbewegung des Dachelements, wirkt jedoch gegen Ende der Öffnungsbewegung nicht mehr nennenswert auf den verschwenkten Tragarm ein und kann demzufolge das Ende der Öffnungsbewegung nicht mehr in einer für einen Benutzer spürbaren und angenehmen Weise unterstützen.

Es wird deshalb als eine Aufgabe der vorliegenden Erfindung angesehen, eine Aufstelleinrichtung der eingangs genannten Gattung so auszugestalten, dass eine manuelle Betätigung der Hubeinrichtung über die gesamte Dauer der Öffnungsbewegung möglichst stark unterstützt und für einen Benutzer spürbar erleichtert wird.

Diese Aufgabe wird bei einer Aufstelleinrichtung der eingangs genannten Gattung dadurch gelöst, dass mindestens ein verschwenkbarer Tragarm mit einem ersten Stellende an einem an dem Dachelement oder an dem die Dachöffnung umgebenden Rahmen festgelegten Beschlagselement verschwenkbar und linear verlagerbar gelagert ist, und dass an dem Beschlagselement ein Antriebsmittel angeordnet ist, welches bei einer Öffnungsbewegung der Hubeinrichtung eine lineare Verlagerung des Stellendes des Tragarms längs des Beschlagelements unterstützt. Eine beispielsweise linear auf das linear verlagerbare Stellende des Tragarms ausgeübte Krafteinwirkung bewirkt eine Verlagerung des Stellendes des Tragarms. Dadurch wird gleichzeitig eine Verschwenkung des Tragarms erzwungen, da der Tragarm gelenkig mit dem anderen Tragarm der Hubeinrichtung verbunden ist und das dem Stellende gegenüberliegende Ende des Tragarms verschwenkbar an dem anderen Beschlagselement angelenkt ist. Durch die lineare Kraftwirkung des Antriebsmittels längs des Beschlagselements wird demzufolge eine quer dazu gerichtete Öffnungsbewegung der Aufstelleinrichtung unterstützt. Aus der Praxis sind verschiedene kostengünstige Antriebsmittel bekannt, die eine linear gerichtete Kraftwirkung erzeugen können.

Die Öffnungsbewegung der Aufstelleinrichtung wird mit einer beabstandet von der Hubeinrichtung angeordneten Gasdruckfeder kombiniert, sodass die Gasdruckfeder eine bereits begonnene Öffnungsbewegung unterstützt, wobei die Federkraft mit zunehmendem Abstand des Aufstelldachs von dem Rahmen immer stärker wird. Die Gasdruckfeder kann dabei mit ihrer Federstärke und ihrer Anordnung so vorgegeben werden, dass die Öffnungsbewegung gegen Ende durch die Gasdruckfeder selbsttätig durchgeführt wird und das vollständig aufgestellte Aufstelldach durch die Federwirkung der Gasdruckfeder in der geöffneten Position zurückgehalten wird.

Eine linear gerichtete Kraftwirkung kann in vorteilhafter Weise dadurch erzeugt werden, dass das Antriebsmittel ein linear verlagerbares Druckelement aufweist, welches in einer geschlossenen Position der Hubeinrichtung an dem Tragarm anliegt und mindestens zu Beginn der Öffnungsbewegung der Hubeinrichtung durch eine lineare Verlagerung des Druckelements eine die lineare Verlagerung des Tragarms unterstützende Druckkraft auf den Tragarm ausübt. Das Druckelement kann beispielsweise ein linear verlagerbarer Druckstößel sein, der an dem Stellende des Tragarms anliegt. Der Druckstößel kann beispielsweise durch eine Magnetkraft, elektromotorisch oder durch einen Spindelantrieb linear verlagert werden und eine entsprechende Verlagerung des daran anliegenden Stellendes des Tragarms erzwingen. Ein Antriebsmittel mit einem linear verlagerbaren Druckelement kann raumsparend an dem Hubscherengelenkmechanismus angeordnet sein. Das linear verlagerbare Druckelement kann dabei in einer geschlossenen Position der Hubeinrichtung parallel zu den beiden ebenfalls im Wesentlichen parallel zueinander ausgerichteten Tragarmen und in Verlängerung eines der beiden Tragarme angeordnet sein. Dadurch ist insbesondere bei einer Anordnung der erfindungsgemäßen Hubeinrichtung zwischen einem Dachelement und einem Rahmen einer Dachöffnung eines Fahrzeugs eine besonders raumsparende Anordnung des Antriebsmittels in der Nähe des Spalts zwischen dem Dachelement und dem Rahmen möglich.

Gemäß einer besonders vorteilhaften Ausgestaltung des Erfindungsgedankens ist vorgesehen, dass das Antriebsmittel eine Gasdruckfeder mit einem linear verlagerbaren Druckkolben ist. Es sind handelsübliche Gasdruckfedern bekannt, deren Federkraft und Federweg ohne weiteres ausreichen, um bei einer Verwendung einer entsprechend ausgestatteten Hubeinrichtung bei einem Aufstelldach eines Fahrzeugs den Beginn einer Öffnungsbewegung derart zu unterstützen, dass nahezu keine zusätzliche manuelle Kraftwirkung erforderlich ist. Eine geeignete Gasfeder ist kostengünstig erhältlich, weist ein geringes Eigengewicht von beispielsweise etwa 100 g auf und ist nahezu wartungsfrei und unempfindlich gegenüber Umwelteinflüssen. Eine Gasfeder kann ohne nennenswerten konstruktiven Aufwand in geeigneter Weise an dem Beschlagselement festgelegt und mit dem Stellende des Tragarms kraftübertragend verbunden werden.

Einer optionalen Ausgestaltung des Erfindungsgedankens zufolge ist vorgesehen, dass das Druckelement in der geschlossenen Position der Hubeinrichtung lose an dem Stellende des Tragarms anliegt. Das Stellende des Tragarms ist in dem zugeordneten Beschlagselement bereits in einer linearen Zwangsführung gelagert, sodass eine gleichgerichtete lineare Zwangsführung des Druckelements ausreicht, um bei einer Betätigung des Druckelements eine gleichgerichtete und gleichgroße Verlagerung des Stellendes des Tragarms zu erzwingen, auch ohne dass das Druckelement starr oder gelenkig mit dem Stellende des Tragarms verbunden ist. Die jeweils erforderlichen Zwangsführungen können äußerst kostengünstig beispielsweise bei dem Stellende des Tragarms durch ein Langloch bewirkt werden, in das ein Führungszapfen an dem Stellende des Tragarms eingreift, und bei dem Druckelement durch einen zylindrischen Druckzylinder mit einem darin zwangsgeführten Druckkolben als Druckelement bewirkt werden.

In besonders vorteilhafter Weise ist optional vorgesehen, dass eine maximale Verlagerung des Druckelements geringer als eine maximale Verlagerung des Stellendes des Tragarms längs des Beschlagselements ist. Eine zusätzliche unterstützende Wirkung des Antriebsmittels der erfindungsgemäßen Hubeinrichtung ist demzufolge nur zu der Beginn der Öffnungsbewegung von besonderer Bedeutung. Das Antriebsmittel kann deshalb derart vorgegeben und ausgestaltet sein, dass das verlagerbare Druckelement des Antriebsmittels lediglich über einen Teilabschnitt des maximalen Verlagerungswegs des Stellendes verlagerbar ist und kraftübertragend auf das Stellende des Tragarms einwirkt. Eine geringere maximale Verlagerung des Druckelements des Antriebsmittels ermöglicht eine kompaktere Bauform und damit einen geringeren Raumbedarf sowie ein oftmals geringeres Eigengewicht des Antriebsmittels. So kann beispielsweise das Antriebsmittel eine Gasdruckfeder mit einem Federhub von etwa 10 cm oder weniger sein. Eine derartige Gasdruckfeder ist handelsüblich mit einer ausreichend hohen Federkraft kostengünstig erhältlich.

In vielen Fällen kann die erfindungsgemäße Hubeinrichtung mit einem einzigen Antriebsmittel ausgestattet sein, welches die Öffnungsbewegung der Hubeinrichtung für viele Anwendungsbereiche ausreichend unterstützt. Dabei kann das Antriebsmittel wahlweise an dem Beschlagselement angeordnet sein, das an dem Aufstelldach festgelegt ist, oder an dem Beschlagselement angeordnet sein, welches an dem die Dachöffnung umgebenden Rahmen festgelegt ist. Im Hinblick auf eine vor Umwelteinflüssen möglichst geschützte Positionierung des Antriebsmittels kann es zweckmäßig sein, das Antriebsmittel an dem Beschlagselement anzuordnen, welches an dem aufstellbaren Dachelement festgelegt ist. Es sind jedoch auch andere Anordnungen für das Antriebsmittel denkbar und gegebenenfalls vorteilhaft.

Gemäß einer optionalen Ausgestaltung des Erfindungsgedankens kann es vorgesehen sein, dass die Hubeinrichtung einen ersten Tragarm und einen zweiten Tragarm aufweist, die gelenkig miteinander verbunden sind und von denen jeder Tragarm schwenkbar und linear verlagerbar an einem zugeordneten Beschlagselement angeordnet ist, und wobei an jedem der zugeordneten Beschlagselemente ein die lineare Verlagerung des Stellendes des betreffenden Tragarms unterstützendes Antriebsmittel angeordnet ist. Auf diese Weise kann eine Öffnungsbewegung der Hubeinrichtung zu Beginn der Öffnungsbewegung durch zwei Antriebsmittel unterstützt werden. Jedes der beiden Antriebsmittel kann dadurch kleiner dimensioniert sein und lediglich eine geringere einzelne Kraftwirkung auf das jeweilige Stellende des zugeordneten Tragarms ausüben, wodurch beispielsweise gegebenenfalls ein noch kleinerer Bauraum für die erfindungsgemäße Hubeinrichtung ermöglicht werden kann. Die beiden Antriebsmittel können auch unterschiedlich ausgestaltet sein und beispielsweise mit dem jeweiligen Druckelement eine unterschiedlich große Kraftwirkung über gegebenenfalls unterschiedlich lange Verlagerungswegabschnitte des Stellendes des Tragarms längs des betreffenden Beschlagselements auf das Stellende des Tragarms ausüben. Dadurch kann mit vergleichsweise geringem Aufwand und mit handelsüblich erhältlichen Antriebsmitteln eine individuell vorgebbare Kraftwirkung durch die beiden Antriebsmittel die Öffnungsbewegung der Hubeinrichtung unterstützen.

Nachfolgend wird ein exemplarisches Ausführungsbeispiel des Erfindungsgedankens näher erläutert, das schematisch in der Zeichnung dargestellt ist. Es zeigt:
Fig. 1 eine schematische Seitenansicht eines oberen Teils eines Wohnmobils mit einem aufgestellten Dachelement,
Fig. 2 eine schematische Draufsicht auf eine Dachöffnung des Wohnmobils und auf einen die Dachöffnung umgebenden Rahmen, an welchem eine das Dachelement führende Hubeinrichtung angeordnet ist,
Fig. 3 eine Seitenansicht einer erfindungsgemäßen Hubeinrichtung in einer geschlossenen Schließposition,
Fig. 4 eine Seitenansicht der in Fig. 3 gezeigten Hubeinrichtung in einer teilweise geöffneten Stellung,
Fig. 5 eine Seitenansicht der in den Fig. 3 und 4 gezeigten Hubeinrichtung in einer vollständig geöffneten Öffnungsposition, und
Fig. 6 eine vergrößert dargestellte Seitenansicht eines in Fig. 4 eingezeichneten Teilbereichs VI der in den Fig. 3 bis 5 dargestellten Hubeinrichtung aus einer entgegengesetzten Blickrichtung.

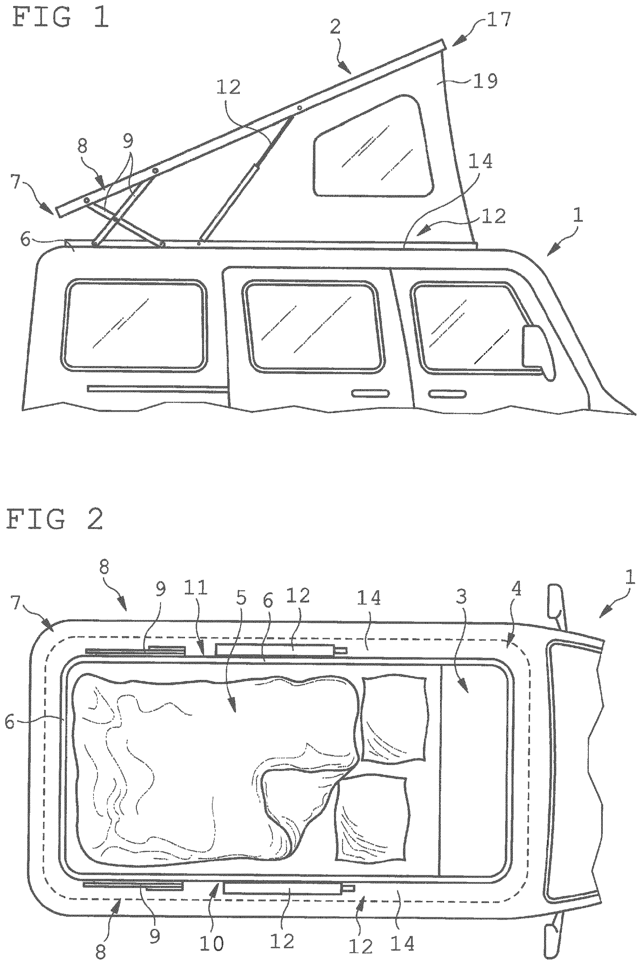

In Figur 1 ist exemplarisch eine Seitenansicht eines oberen Teils eines Wohnmobils 1 mit einem aufgestellten Dachelement 2 dargestellt. In Figur 2 ist zur Veranschaulichung eine Draufsicht auf das Wohnmobil 1 ohne das aufgestellte Dachelement 2 gezeigt, so dass eine Dachöffnung 3 und ein die Dachöffnung 3 umgebender Rahmen 4 sichtbar sind.

Die Dachöffnung 3 ist hinsichtlich ihrer Abmessungen so bemessen, dass bei Bedarf eine im Bereich der Dachöffnung 3 oder unterhalb angeordnete Liegefläche 5 ausreichend Platz für zwei Personen bietet. Der die Dachöffnung 3 umgebende Rahmen 4 weist eine zu dem Dachelement 2 gerichtete Wulst 6 auf, um unerwünscht eindringendes Regenwasser abweisen zu können und die Stabilität des Rahmens 4 zu erhöhen. Es ist ebenfalls möglich und oftmals zweckmäßig, stattdessen oder zusätzlich an einem Rand des Dachelements 2 eine umlaufende Abdichtung vorzusehen. An dem Rahmen 4 und/oder an dem Dachelement 2 können zusätzlich nicht dargestellte Dichtungseinrichtungen angeordnet sein, um bei einem geschlossenen und auf dem Rahmen 4 aufliegenden Dachelement 2 das Eindringen von Feuchtigkeit insbesondere während einer Fahrt des Wohnmobils 1 zu verhindern.

Das Dachelement 2 ist an einem heckseitigen ersten Ende 7 über eine Hubeinrichtung 8 an dem Rahmen 4 gelagert. Die Hubeinrichtung 8 weist zwei gelenkig miteinander verbundene und über in den Figuren 1 und 2 nicht dargestellte Beschlagselemente an dem Dachelement 2 und an dem Rahmen 4 gelagerte Tragarme 9 auf, die bei einer Aufstellbewegung des Dachelements 2 sowohl eine Schwenkbewegung als auch eine Hubbewegung des ersten Endes 7 des Dachelements 2 ermöglichen. Durch die Verwendung von Hubeinrichtungen 8 an gegenüberliegenden Seitenrändern 10, 11 des Rahmens 4 bzw. des Dachelements 2 kann mit diesen Hubeinrichtungen 8 eine zuverlässige Lagerung und Führung des Dachelements 2 bewirkt werden.

Eine Öffnungsbewegung des Dachelements 2 wird durch eine beabstandet von der Hubeinrichtung 8 zwischen dem Dachelement 2 und dem Rahmen 4 angeordnete Gasdruckfeder 12 unterstützt. Die Gasdruckfeder 12 ist mit einem ersten Ende schwenkbar an dem Rahmen 4 und mit einem entgegengesetzten zweiten Ende schwenkbar an dem Dachelement 2 angelenkt. Die Anordnung und der Federweg der Gasdruckfeder 12 sind an die gewünschte maximale Öffnungsposition des Dachelements 2 angepasst und exemplarisch in Figur 1 dargestellt. Da diese Gasdruckfeder 12 in einer geschlossenen Schließposition des Aufstelldachs, in welcher das Dachelement 2 eng auf dem Rahmen 4 aufliegt, im Wesentlichen parallel zu dem Rahmen 4 und einem Rand des Dachelements 2 ausgerichtet ist, kann mit dieser Gasdruckfeder 12 zu Beginn einer Öffnungsbewegung keine quer zu dem Rahmen 4 gerichtete Kraftwirkung erzeugt werden, sodass diese Gasdruckfeder 12 keine den Beginn der Öffnungsbewegung unterstützende Kraftwirkung ermöglicht, sondern lediglich mit zunehmendem Abstand des Dachelements 2 von dem Rahmen 4 eine nachfolgende Öffnungsbewegung immer stärker unterstützen kann.

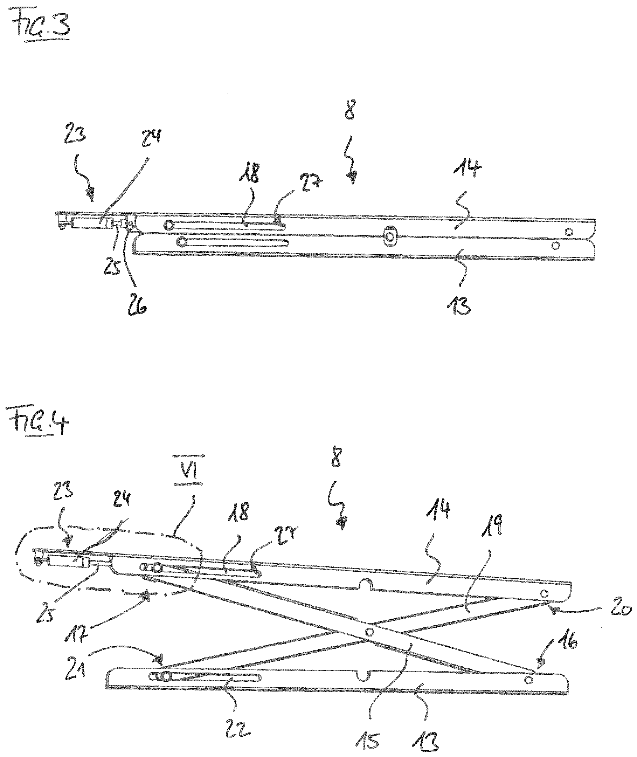

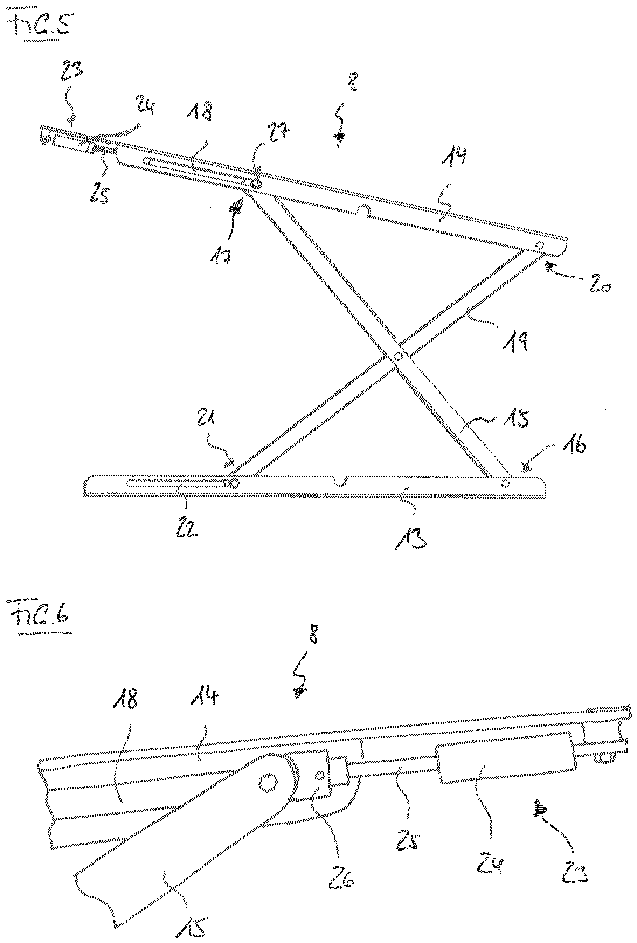

Die in den Figuren 3 bis 6 exemplarisch dargestellte erfindungsgemäße Hubeinrichtung weist ein erstes Beschlagselement 13 auf, welches an dem Rahmen 4 festgelegt ist, und ein zweites Beschlagselement 14 auf, welches an dem Dachelement 2 festgelegt ist. An dem ersten Beschlagselement 13 ist ein erster Tragarm 15 mit einem Schwenkende 16 schwenkbar gelagert. Ein dem Schwenkende 16 gegenüberliegendes Stellende 17 des ersten Tragarms 15 ist in einem Langloch 18 in dem zweiten Beschlagselement 14 ebenfalls schwenkbar und zusätzlich längs des Langlochs 18 verlagerbar gelagert. Durch das Langloch 18 wird ein linearer Verlagerungsweg des Stellendes 17 des ersten Tragarms 15 vorgegeben, der in der Schließposition der Hubeinrichtung 8 im Wesentlichen parallel zu dem in diesen Figuren 3 bis 6 nicht dargestellten Rahmen 4 und dem Rand des Dachelements 2 verläuft, bzw. parallel zu einer Längskante des ersten Beschlagselements 13 und des zweiten Beschlagselements 14 verläuft. Ein zweiter Tragarm 19 ist in gleicher Weise mit einem Schwenkende 20 schwenkbar an dem zweiten Beschlagselement 14 und mit einem Stellende 21 in einem Langloch 22 in dem ersten Beschlagselement 13 gelagert. Die beiden Tragarme 15 und 19 sind zudem beabstandet von den jeweiligen Schwenkenden 16, 20 und Stellenden 17, 21 in einem mittleren Bereich, jedoch etwas außermittig gelenkig miteinander verbunden. Bei einer Öffnungsbewegung aus der in Figur 3 gezeigten Schließposition heraus verschwenken die beiden Tragarme 15 und 19. Gleichzeitig werden die beiden Stellenden 17, 21 in dem jeweils zugeordneten Langloch 18, 22 linear verlagert, sodass das zweite Beschlagselement 14 von dem ersten Beschlagselement 13 wegbewegt wird. In Figur 4 ist beispielhaft eine mittlere Öffnungsposition und in Figur 5 eine vollständige Öffnungsposition dargestellt.

An dem zweiten Beschlagselement 14 ist in Verlängerung des Langlochs 18 eine Gasdruckfeder 23 mit einem linear in einem Druckzylinder 24 geführten Druckkolben 25 angeordnet. Der Druckkolben 25 weist an seinem aus dem Druckzylinder 24 herausragenden Ende ein Kontaktflächenelement 26 auf, welches in der Schließposition der Hubeinrichtung 8 an dem Stellende 17 des ersten Tragarms 15 anliegt und eine längs des Ausrichtung des Langlochs 18 gerichtete Druckkraft auf das Stellende 17 des ersten Tragarms 15 ausübt. Dabei bildet die Gasdruckfeder 23 ein erfindungsgemäßes Antriebsmittel, welches eine Öffnungsbewegung der Hubeinrichtung 8 zu Beginn der Öffnungsbewegung unterstützt, indem die zu Beginn der Öffnungsbewegung erfolgende Verlagerung des Stellendes 17 des ersten Tragarms 15 in dem Langloch 18 unterstützt wird.

Der maximale Verlagerungsweg des aus dem Druckzylinder 24 herausragenden Druckkolbens 25 beträgt lediglich etwa 10 cm und ist kürzer als die Erstreckung des Langlochs 18 und damit kürzer als der maximale Verlagerungsweg des Stellendes 17 des ersten Tragarms 15. Das Kontaktflächenelement 26 des Druckkolbens 25 liegt mit einer an den Endbereich des ersten Tragarms 15 angepassten Kontaktfläche lose an dem Stellende 17 an und unterstützt zu Beginn der Öffnungsbewegung die dabei erfolgende Verlagerung des Stellendes 17 des ersten Tragarms 15 in dem Langloch 18, bis der Druckkolben 25 maximal aus dem Druckzylinder 24 herausgeschoben ist. Danach löst sich das Stellende 17 des ersten Tragarms 15 von dem Kontaktflächenelement 26 und verlagert sich während der weiteren durch das Langloch 18 geführten Öffnungsbewegung immer weiter weg von dem Kontaktflächenelement 26, bis die Öffnungsbewegung durch einen Endanschlag an einem der Gasdruckfeder 23 entgegengesetzten Ende 27 des Langlochs 18 begrenzt wird und sich das zweite Beschlagselement 14 in einer maximal ausgelenkten Öffnungsposition befindet.

Bei einer Schließbewegung wirkt die Gasdruckfeder 23 zunächst nicht auf das Stellende 17 des ersten Tragarms 15 ein, da sich das von dem Langloch 18 geführte Stellende 17 noch weit entfernt von dem vollständig ausgefahrenen Anschlagselement 26 der Gasdruckfeder 23 befindet. Sobald durch die Verschwenkung des ersten Tragarms 15 während der Schließbewegung das Stellende 17 mit dem Anschlagselement 26 in Anlage kommt, wirkt die von der Gasdruckfeder 23 erzeugte Federkraft einer weiteren Schließbewegung entgegen und kann dadurch beispielsweise auch ein ungebremstes Zuklappen bzw. Herabfallen des Dachelements 2 auf den Rahmen 4 verhindern. In der vollständig geschlossenen Schließposition, in welcher das Dachelement 2 eng an dem Rahmen 4 anliegt und die Dachöffnung 3 verschließt, drückt das Stellende 17 den Druckkolben 25 der Gasdruckfeder 23 maximal in den Druckzylinder 24 hinein, wodurch eine große Federkraftwirkung erzeugt wird, welche das Stellende 17 des ersten Tragarms 15 wieder zurückverlagern will und eine nachfolgend erfolgende Öffnungsbewegung unterstützt.

Abweichend von dem exemplarisch dargestellten Ausführungsbeispiel für die Hubeinrichtung 8 kann mindestens einer der beiden Tragarme 15, 19 auch über ein Kniegelenk oder über einen Gelenkhebel mit dem zugeordneten Beschlagselement 13, 14 verbunden sein. Es ist ebenfalls möglich, dass die Beschlagselemente 13, 14 nicht jeweils ein Stellende 17, 21 des einen Tragarms 15, 19 und ein Schwenkende 16, 20 des anderen Tragarms 19, 15 lagern, sondern dass für jedes Stellende 17, 21 und für jedes Schwenkende 16, 20 der beiden Tragarme 15, 19 jeweils ein gesondertes Beschlagselement vorgesehen ist. Die erfindungsgemäße Hubeinrichtung 8 kann zudem, wie bereits ausgeführt, nicht nur für Aufstelldächer von Fahrzeugen und insbesondere von Wohnmobilen verwendet werden, sondern eignet sich auch für zahlreiche verschiedene verstellbare Dachelemente oder Fensterelemente bei Fahrzeugen oder Gebäuden.

## Patentansprüche

1. Aufstelleinrichtung mit einer Hubeinrichtung (8) für ein aufstellbares Fahrzeugdach mit einem verlagerbaren Dachelement (2), wobei das Dachelement (2) an einem eine Dachöffnung (3) eines Fahrzeugs umgebenden Rahmen (4) verlagerbar gelagert werden kann, so dass das Dachelement (2) in einer Schließposition die Dachöffnung (3) bedeckt und in einer Öffnungsposition mindestens bereichsweise von der Dachöffnung (3) beabstandet ist, wobei die Hubeinrichtung (8) eine Hubscherengelenkmechanik mit zwei jeweils beabstandet von den jeweiligen Enden gelenkig miteinander verbundenen Tragarmen (15, 19) aufweist, wobei eine Gasdruckfeder (12) beabstandet von der Hubeinrichtung (8) so zwischen dem Rahmen (4) und dem Dachelement (2) angeordnet ist, dass ein erstes Ende der Gasdruckfeder (12) schwenkbar an dem Rahmen (4) und ein entgegengesetztes zweites Ende der Gasdruckfeder (12) schwenkbar an dem Dachelement (2) angelenkt ist, **dadurch gekennzeichnet, dass** mindestens ein verschwenkbarer Tragarm (15) mit einem ersten Stellende (17) an einem an dem Dachelement (2) oder an dem die Dachöffnung (3) umgebenden Rahmen (4) festgelegten Beschlagselement (14) verschwenkbar und linear verlagerbar gelagert ist, und dass an dem Beschlagselement (14) ein Antriebsmittel angeordnet ist, welches bei einer Öffnungsbewegung der Hubeinrichtung (8) eine lineare Verlagerung des Stellendes (17) des Tragarms (15) längs des Beschlagelements (14) unterstützt.

2. Aufstelleinrichtung nach Anspruch 1, **dadurch gekennzeichnet, dass** das Antriebsmittel ein linear verlagerbares Druckelement aufweist, welches in einer geschlossenen Position der Hubeinrichtung (8) an dem Stellende (17) des Tragarms (15) anliegt und mindestens zu Beginn der Öffnungsbewegung der Hubeinrichtung (8) durch eine lineare Verlagerung des Druckelements eine die lineare Verlagerung des Stellendes (17) des Tragarms (15) unterstützende Druckkraft auf den Tragarm (15) ausübt.

3. Aufstelleinrichtung nach Anspruch 1 oder Anspruch 2, **dadurch gekennzeichnet, dass** das Antriebsmittel eine Gasdruckfeder (23) mit einem linear verlagerbaren Druckkolben (25) ist.

4. Aufstelleinrichtung nach einem der Ansprüche 2 und 3, **dadurch gekennzeichnet, dass** das Druckelement in der geschlossenen Position der Hubeinrichtung (8) lose an dem Stellende (17) des Tragarms (15) anliegt.

5. Aufstelleinrichtung nach Anspruch 4, **dadurch gekennzeichnet, dass** eine maximale Verlagerung des Druckelements geringer als eine maximale Verlagerung des Stellendes (17) des Tragarms (15) längs des Beschlagselements (14) ist.

6. Aufstelleinrichtung nach einem der vorangehenden Ansprüche, **dadurch gekennzeichnet, dass** die Hubeinrichtung (8) einen ersten Tragarm (15) und einen zweiten Tragarm (19) aufweist, die gelenkig miteinander verbunden sind und von denen jeder Tragarm (15, 19) mit einem Stellende (17, 21) schwenkbar und linear verlagerbar an einem zugeordneten Beschlagselement (14, 13) angeordnet ist, und wobei an jedem der zugeordneten Beschlagselemente (14, 13) ein die lineare Verlagerung des Stellendes (17, 21) des betreffenden Tragarms (15, 19) unterstützendes Antriebsmittel angeordnet ist.

## Claims

1. Elevation device comprising a raising device (8) for an elevating vehicle roof comprising a displaceable roof element (2), wherein the roof element (2) can be displaceably mounted on a frame (4) surrounding a roof opening (3) in a vehicle such that the roof element (2) covers the roof opening (3) in a closed position and is at a distance from the roof opening (3) at least in regions in an open position, wherein the raising device (8) comprises a raising scissor-joint mechanism that comprises two support arms (15, 19) which are each interconnected in an articulated manner so as to be at a distance from the respective ends, wherein a gas pressure spring (12) is arranged between the frame (4) and the roof element (2) at a distance from the raising device (8) such that a first end of the gas pressure spring (12) is pivotally articulated to the frame (4) and an opposite, second end of the gas pressure spring (12) is pivotally articulated to the roof element (2), **characterised in that** at least one pivotable support arm (15) is pivotally and linearly movably mounted, by a first adjustment end (17), on a fitting element (14) that is fastened to the roof element (2) or to the frame (4) surrounding the roof opening (3), and **in that** a drive means is arranged on the fitting element (14), which means assists a linear displacement of the adjustment end (17) of the support arm (15) along the fitting element (14) during an opening movement of the raising device (8).

2. Elevation device according to claim 1, **characterised in that** the drive means comprises a linearly displaceable pressure element, which abuts the adjustment end (17) of the support arm (15) in a closed position of the raising device (8) and, at least at the start of the opening movement of the raising device (8), exerts a compressive force, which assists the linear displacement of the adjustment end (17) of the support arm (15), on the support arm (15), by means of a linear displacement of the pressure element.

3. Elevation device according to claim 1 or claim 2, **characterised in that** the drive means is a gas pressure spring (23) comprising a linearly displaceable pressure piston (25).

4. Elevation device according to any of claims 2 to 3, **characterised in that** the pressure element loosely abuts the adjustment end (17) of the support arm (15) in the closed position of the raising device (8).

5. Elevation device according to claim 4, **characterised in that** a maximum displacement of the pressure element is less than the maximum displacement of the adjustment end (17) of the support arm (15) along the fitting element (14).

6. Elevation device according to any of the preceding claims, **characterised in that** the raising device (8) comprises a first support arm (15) and a second support arm (19), which are interconnected in an articulated manner and each of said support arms (15, 19) is pivotally and linearly displaceably arranged on an associated fitting element (14, 13) with an adjustment end (17, 21), and wherein a drive means that assists the linear displacement of the adjustment end (17, 21) of the relevant support arm (15, 19) is arranged on each of the associated fitting elements (14, 13).

## Revendications

1. Dispositif de relevage comprenant un dispositif de levage (8) pour un toit de véhicule pouvant être relevé, doté d'un élément de toit (2) déplaçable, l'élément de toit (2) pouvant être monté de manière déplaçable sur un cadre (4) entourant une ouverture de toit (3) d'un véhicule, de telle sorte que l'élément de toit (2) recouvre l'ouverture de toit (3) dans une position de fermeture et est espacé, au moins dans certaines zones, de l'ouverture de toit (3) dans une position d'ouverture, le dispositif de levage (8) comportant un mécanisme d'articulation à ciseaux de levage doté de deux bras porteurs (15, 19) reliés l'un à l'autre de manière articulée et de manière espacée des extrémités respectives, un ressort à gaz (12) étant disposé, de manière espacée du dispositif de levage (8), entre le cadre (4) et l'élément de toit (2) de telle manière qu'une première extrémité du ressort à gaz (12) est articulée de manière pivotante sur le cadre (4) et une seconde extrémité opposée du ressort à gaz (12) est articulée de manière pivotante sur l'élément de toit (2), **caractérisé en ce qu'**au moins un bras porteur (15) pivotant est monté déplaçable de manière pivotante et linéaire avec une première extrémité de réglage (17) sur un élément de ferrure (14) fixé sur l'élément de toit (2) ou sur le cadre (4) entourant l'ouverture de toit (3) et **en ce qu'**un moyen d'entraînement est disposé sur l'élément de ferrure (14), ledit moyen d'entraînement facilitant, lors d'un mouvement d'ouverture du dispositif de levage (8), un déplacement linéaire de l'extrémité de réglage (17) du bras porteur (15) le long de l'élément de ferrure (14).

2. Dispositif de relevage selon la revendication 1, **caractérisé en ce que** le moyen d'entraînement comporte un élément de pression déplaçable de manière linéaire, qui, dans une position fermée du dispositif de levage (8), s'appuie contre l'extrémité de réglage (17) du bras porteur (15) et exerce, au moins au début du mouvement d'ouverture du dispositif de levage (8), par un déplacement linéaire de l'élément de pression, une force de pression sur le bras porteur (15), facilitant le déplacement linéaire de l'extrémité de réglage (17) du bras porteur (15).

3. Dispositif de relevage selon la revendication 1 ou la revendication 2, **caractérisé en ce que** le moyen d'entraînement est un ressort à gaz (23) doté d'un piston de compression (25) déplaçable de manière linéaire.

4. Dispositif de relevage selon l'une des revendications 2 et 3, **caractérisé en ce que**, dans la position fermée du dispositif de levage (8), l'élément de pression s'appuie sans forcer contre l'extrémité de réglage (17) du bras porteur (15) .

5. Dispositif de relevage selon la revendication 4, **caractérisé en ce qu'**un déplacement maximal de l'élément de pression est inférieur à un déplacement maximal de l'extrémité de réglage (17) du bras porteur (15) le long de l'élément de ferrure (14).

6. Dispositif de relevage selon l'une des revendications précédentes, **caractérisé en ce que** le dispositif de levage (8) comporte un premier bras porteur (15) et un second bras porteur (19), qui sont reliés l'un à l'autre de manière articulée, et chacun desdits bras porteurs (15, 19) est disposé, avec une extrémité de réglage (17, 21), déplaçable de manière pivotante et linéaire sur un élément de ferrure (14, 13) associé, et un moyen d'entraînement facilitant le déplacement linéaire de l'extrémité de réglage (17, 21) du bras porteur (15, 19) concerné étant disposé sur chacun des éléments de ferrure (14, 13) associés.
